# EUROPÄISCHE PATENTSCHRIFT

(11) **EP 1 491 811 B1**
(45) Veröffentlichungstag und Bekanntmachung des Hinweises auf die Patenterteilung: **29.03.2006**
(21) Anmeldenummer: 04014538.5
(22) Anmeldetag: 22.06.2004
(51) Int. Cl.: F16L 25/00

(54) **Rohr-Bausatz**
Pipe construction
Construction de tuyau

(30) Priorität: 26.06.2003 DE 10328626
(43) Veröffentlichungstag der Anmeldung: 29.12.2004
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(56) Entgegenhaltungen:
- WO-A-00/31457
- US-A- 6 126 209
- US-A1- 2002 060 454

## Beschreibung

Die Erfindung betrifft einen Rohr-Bausatz nach dem Oberbegriff des Anspruches 1. Derartige Rohr-Bausätze sind beispielsweise bekannt aus EP 0 563 575 A2 (entsprechend US 5,320,797), EP 0 789 176 A1 (entsprechend US 5,996,635), EP 0 890 770 A2 (entsprechend US 5,992,469) und EP 1 143 183 A2 (entsprechend US 6,343,623).

Aus US 2002/0060454 A 1 ist ein weiterer derartiger Rohr-Bausatz bekannt, bei dem die beiden dem freien Ende eines Spitzendes zugeordneten, als Wellenberge ausgebildeten, zwischen sich eine Dichtung aufnehmenden Wellenberge mit Polyurethan ausgeschäumt sind. Hierdurch wird das Spitzende verstärkt. Eine solche Ausgestaltung ist herstellungstechnisch sehr aufwendig.

Aus der' WO 00/31457 A 1 ist ein weiterer Rohr-Bausatz nach dem Oberbegriff des Anspruches 1 bekannt, bei dem alle als Wellenberge ausgebildeten Vorsprünge des Spitzendes gegenüber den Wellenbergen der normalen Rohrabschnitte eine vergrößerte Wandstärke aufweisen, da die bei der Herstellung eingebrachte Kunststoffinenge pro Längeneinheit des Spitzendes die gleiche ist wie bei den Wellenbergen größeren Durchmessers. Innerhalb des Spitzende ist dementsprechend die Wanddicke der Wellenberge überall gleich.

In der Praxis hat sich gezeigt, dass bei größeren Rohrdurchmessern und auch bei größerer radialer Erstreckung der Vorsprünge eine mediendichte Steckverbindung nicht dauerhaft gewährleistet ist. Diese Erscheinung tritt insbesondere bei thermoplastischen Werkstoffen auf. Insbesondere in Wasserschutzgebieten ist dies von Nachteil, da dort eine dauerhafte Abdichtung bei einem Druck von 1 bis 3 bar in den Rohren einschließlich der Rohrverbindungen gefordert wird.

Der Erfindung liegt daher die Aufgabe zugrunde, einen Rohr-Bausatz der gattungsgemäßen Art so auszugestalten, dass insbesondere auch bei Einsatz von thermoplastischen Werkstoffen für die Rohre eine dauerhafte Dichtheit der Steckverbindung gewährleistet ist.

Diese Aufgabe wird erfindungsgemäß durch die Merkmale im Kennzeichnungsteil des Anspruches 1 gelöst. Der Kern der Erfindung liegt darin, dass das Spitzende im direkten Umfeld der Dichtung verstärkt wird. Diese Verstärkung bzw. Verdickung kann durch eine Reduzierung der Formbackengeschwindigkeit oder eine Erhöhung des Materialflusses aus dem einen Extruder oder den beiden Extrudern erreicht werden. Es geht hierbei nicht um eine Erhöhung der Ringsteifigkeit des Spitzendes, die auch ohne Wandverstärkung bzw. -verdickung durch eine geeignete Formgebung des Profils der ringförmigen Vorsprünge erreicht werden könnte, sondern allein um eine bessere Kompensation der von der Dichtung auf die radial nach außen vorspringenden Vorsprünge ausgeübten Kräfte. Mit anderen Worten geht es darum, die radial nach außen vorstehenden ringförmigen Vorsprünge, gegen die die Dichtung anliegt, so zu verstärken, dass sie die für eine dauerhafte Dichtung notwendigen Reaktionskräfte dauerhaft aufbringen können.

Zahlreiche Vorteile und zum Teil erfinderische Weiterbildungen ergeben sich aus den Unteransprüchen.

Weitere Merkmale Vorteile und Einzelheiten der Erfindung ergeben sich aus der Beschreibung von Ausführungsbeispielen anhand der Zeichnung. Es zeigt:
- Fig. 1: ein erstes Ausführungsbeispiel eines Rohr-Bausatzes im Teil-Längsschnitt, der fortlaufend aus einem Rohrabschnitt, einer Rohr-Muffe, einem Spitzende und einem weiteren Rohrabschnitt hergestellt wird,
- Fig. 2: eine Rohrverbindung zwischen den Rohrabschnitten nach dem Durchtrennen des Verbundrohres,
- Fig. 3: ein zweites Ausführungsbeispiel eines Rohr-Bausatzes in einer Darstellung gemäß Fig. 2,
- Fig. 4: ein drittes Ausführungsbeispiel eines Rohr-Bausatzes in einer Darstellung gemäß Fig. 2,
- Fig. 5: das dritte Ausführungsbeispiel eines Rohr-Bausatzes mit einem zusätzlichen Spannband,
- Fig. 6: ein viertes Ausfilhrungsbeispiel eines Rohr-Bausatzes in einer Darstellung gemäß Fig. 2,
- Fig. 7: einen Rohr-Bausatz mit als Rippenrohren ausgebildeten Rohrabschnitten in einer Darstellung gemäß Fig. 2, der nicht Jeil der beanspruchten Erfindung ist, und
- Fig. 8: einen Rohr-Bausatz mit einer Steck-Muffe, der ebenfalls nicht Jeil der beanspructhten Erfindung ist.

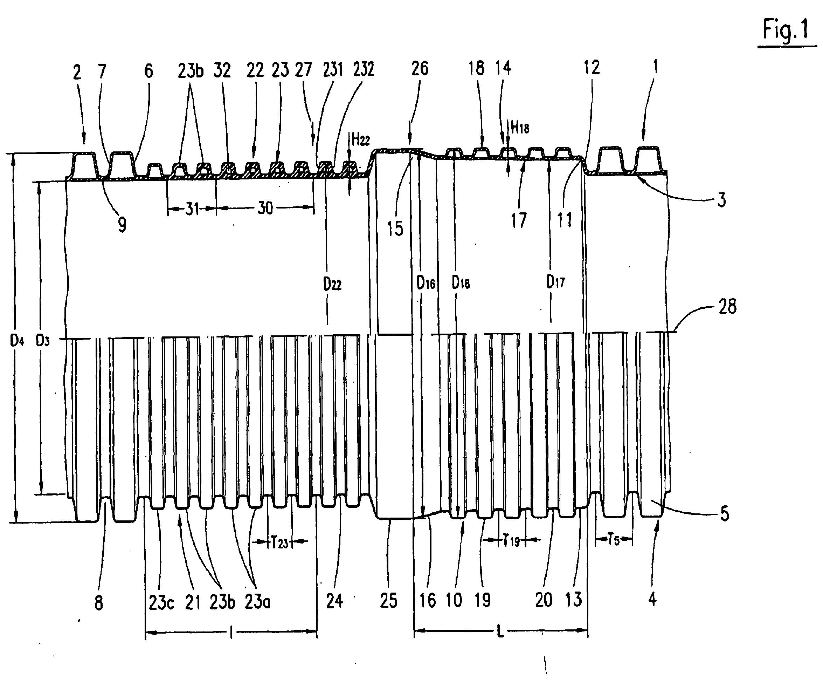

Wie Fig. 1 erkennen lässt, wird ein Verbundrohr fortlaufend in einem Rohr-Strang hergestellt, der im Wesentlichen aus den eigentlichen Rohrabschnitten 1, 2 besteht. Diese weisen in üblicher Weise ein glattwandiges zylindrisches Innenrohr 3 und ein gewelltes Außenrohr 4 auf. Dieses Au-ßenrohr 4 weist als radial nach außen vorspringende ringförmige Vorsprünge etwa trapezförmige Wellenberge 5 auf, wobei jeweils zwischen den Flanken 6, 7 zweier benachbarter Wellenberge 5 ein Wellental 8 ausgebildet ist. Am Grund 9 des Wellentals 8 ist das Außenrohr 4 jeweils mit dem Innenrohr 3 verschweißt. Derartige Verbundrohre mit diesem Aufbau sind allgemein bekannt und in der Praxis verbreitet.

Zwischen den beiden Rohrabschnitten 1, 2, und zwar anschließend an den Rohrabschnitt 1, ist eine Rohr-Muffe 10 ausgebildet, die im Bereich des Muffengrundes 11, d. h. anschließend an einen Erweiterungsabschnitt 12 des Rohrabschnitts 1, einen kurzen glattwandigen Abschnitt 13 aufweist, der zylindrisch ausgebildet ist. Dieser glattwandige Abschnitt 13 ist gleichermaßen wie der Erweiterungsabschnitt 12 nicht doppelwandig, sondern überwiegend einwandig ausgebildet. An den glattwandigen Abschnitt 13 schließt sich wiederum ein Verbundrohr-Abschnitt 14 an. Im Anschluss daran ist die Rohr-Muffe 10 wieder einwandig ausgebildet, und zwar mit einem sich konisch nach außen zu einer Einführöffnung 15 hin erweiternden Einführabschnitt 16. Der Verbundrohr-Abschnitt 14 ist im Prinzip in gleicher Weise ausgebildet wie die Rohrabschnitte 1 und 2, d. h. er weist einen im Wesentlichen zylindrischen, also glattwandigen, Innenrohr-Abschnitt 17 und einen gewellten ersten Außenrohr-Abschnitt 18 mit Wellenbergen 19 als radial nach außen vorspringenden, ringförmigen Vorsprüngen auf, wobei der erste Außenrohr-Abschnitt 18 ebenfalls jeweils im Bereich der Wellentäler 20 mit dem Innenrohr-Abschnitt 17 verschweißt ist. Die Wellenberge 19 sind im Wesentlichen über die volle Länge der Rohr-Muffe 10 angeordnet, mit Ausnahme des Einführabschnitts 16 und des kurzen Abschnitts 13.

Zwischen der Rohr-Muffe 10 und dem Rohrabschnitt 2, also unmittelbar anschließend an diesen, ist ein Spitzende 21 ausgebildet, dessen Innenseite durch das Innenrohr 3 gebildet und begrenzt wird. Es ist mit einem gewellten zweiten Außenrohr-Abschnitt 22 mit als Wellenberge 23 ausgebildeten radial nach außen vorspringenden, ringförmigen Vorsprüngen versehen, wobei der zweite Außenrohr-Abschnitt 22 ebenfalls jeweils im Bereich der Wellentäler 24 mit dem Innenrohr 3 verschweißt ist. Die Wellenberge 23 weisen Flanken 231, 232 auf. Die Außenkonturen aller Wellenberge 5, 19, 23 sind im Wesentlichen ringzylindrisch.

Zwischen der Rohr-Muffe 10 und dem Spitzende 21 befindet sich ein Übergangsabschnitt 25, der durch zwei Sägeschnitte 26, 27 als Abfall herausgeschnitten wird, wie in Fig. 1 angedeutet ist. Da dieses Trennen fortlaufend erfolgt, ist jeweils an einem Rohrabschnitt 1 oder 2 an einem Ende eine Rohr-Muffe 10 und am anderen Ende ein Spitzende 21 ausgebildet.

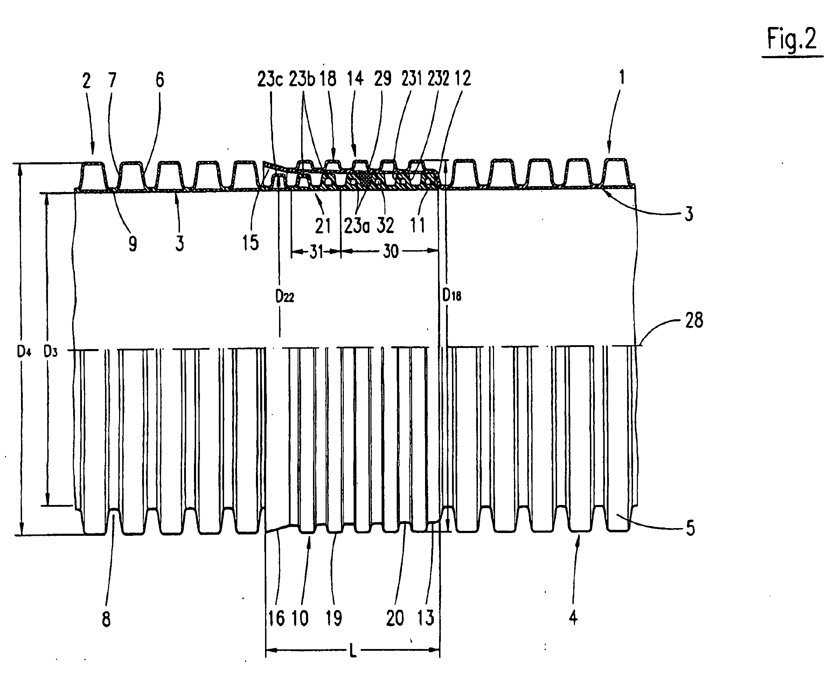

Wie Fig. 2 entnehmbar ist, dient das in der Zeichnung dargestellte Spitzende 21 des Rohrabschnitts 2 dazu, in die Rohr-Muffe 10 des benachbarten Rohrabschnitts 1 eingesetzt zu werden, wodurch zwei Rohrabschnitte 1, 2 miteinander verbunden werden. Beim vollständigen Einstecken des Spitzendes 21 in die Rohr-Muffe 10 kommt der vorderste Wellenberg 23 zur Anlage am Erweiterungsabschnitt 12 im Bereich des Muffengrundes 11, wie Fig. 2 entnehmbar ist. Der dem Spitzende 21 benachbarte Wellenberg 5 liegt dann unmittelbar benachbart-zur Einführöffnung 15 des Einführabschnitts 16 der Rohr-Muffe 10. Die Länge 1 des Spitzendes 21 und die Länge L der Rohr-Muffe 10 sind also etwa gleich.

Die Rohrabschnitte 1, 2 haben einen Außen-Durchmesser D₄, der dem Außen-Durchmesser des Außenrohres 4 entspricht und einen Innen-Durchmesser D₃, der dem Innen-Durchmesser des Innen-Rohres 3 entspricht. Die Rohr-Muffe 10 hat einen Außen-Durchmesser D₁₈, der dem Außen-Durchmesser des ersten Außenrohr-Abschnitts 18 entspricht, wobei der Außen-Durchmesser D₁₆ des Einführabschnitts 16 in der Regel nicht größer als D₁₈ ist. Der Außen-Durchmesser D₂₂ des Spitzendes 21 entspricht dem Außen-Durchmesser des zweiten Außenrohr-Abschnitts 22.

Der Innen-Durchmesser D₁₇ der Rohr-Muffe 10 entspricht dem Innen-Durchmesser des Innenrohr-Abschnitts 17. Der Außen-Durchmesser D₂₂ des Spitzendes 21 und der Innen-Durchmesser D₁₇ der Rohr-Muffe 10 sind - unter Berücksichtigung eines geringfügigen Spiels und der Fertigungstoleranzen - etwa gleich. Insofern gilt: 1,01 D₂₂ ≤ D₁₇ ≤ 1,04 D₂₂. Für den Außen-Durchmesser D₁₈ der Rohr-Muffe 10 gilt in Bezug auf den Außen-Durchmesser D₄ der Rohrabschnitte 1 bzw. 2: D₄ ≈ D₁₈.

Die Gesamthöhe H₂₂ der Wellenberge 23 des zweiten Außenrohr-Abschnitts 22 einschließlich der Wanddicke des Innenrohres 3 ist größer als die Gesamthöhe H₁₈ der Wellenberge 19 einschließlich der Dicke des Innenrohr-Abschnitts 17 des ersten Außenrohr-Abschnitts 18 der Rohr-Muffe 10. Es gilt: 0,3 (H₁₈ + H₂₂) ≤ H₁₈ ≤ 0,7 (H₁₈ + H₂₂). Weiterhin ergibt sich aus der Zeichnung, dass für die Teilung T₁₉ der Wellenberge 19 der Rohr-Muffe 10 im Verhältnis zur Teilung T₅ der Wellenberge 5 der Rohrabschnitte 1, 2 in Richtung der Mittel-Längs-Achse 28 gilt:
0,3 T₅ ≤ T₁₉ ≤ 0,7 T₅. Für die Teilung T₂₃ der Wellenberge 23 des Spitzendes 21 gilt in gleicher Weise: 0,3 T₅ ≤ T₂₃ ≤ 0,7 T₅.

Aus den vorstehenden Ausführungen ergibt sich, dass sowohl die axiale Erstreckung als auch die radiale Erstreckung der Wellentäler 24 des Spitzendes 21 erheblich kleiner ist als diejenige der Wellentäler 8 der Rohrabschnitte 1 bzw. 2. Eine im Wellental 24 angeordnete sich gegen die Flanken 231, 232 benachbarter Wellenberge 23 abstützende Ring-Dichtung 29 kann daher ein wesentlich kleineres Volumen haben als ansonsten eine in einem Wellental 8 anzuordnende Ring-Dichtung.

Die Herstellung des endlosen Verbundrohres, bei dem jeweils zwischen zwei Rohrabschnitten 1 und 2 in-line eine Rohr-Muffe 10 und ein Spitzende 21 angeformt werden, erfolgt mit einer bekannten Technologie, beispielsweise so, wie es in der EP 0 563 575 B1 oder der EP 0 890 770 A2 dargestellt und beschrieben ist, worauf verwiesen werden darf.

Das Verbundrohr, soweit es bisher beschrieben ist, ist aus der EP 1 235 022 A bekannt. Als Besonderheit gegenüber der bekannten Ausführung kommt hinzu, dass das Spitzende 21 im Bereich der Dichtung 29 verstärkt ist. Wie Fig. 1 und 2 entnehmbar ist, sind hierzu der zweite Außenrohr-Abschnitt 22 und/oder das Innenrohr 3 in diesem Bereich dickwandiger ausgebildet als im übrigen Bereich. Diese Verdickung oder Verstärkung insbesondere des zweiten Außenrohr-Abschnittes 22 und des Innenrohres 3 in diesem Bereich wird zweckmäßigerweise durch eine Reduktion der Formbackengeschwindigkeit der zur Herstellung eingesetzten Maschine nach der EP 0 563 575 B 1 und/oder durch eine Erhöhung des Materialflusses für das zu erzeugende Rohr aus dem Extruder erreicht. Der Verdickungs-Bereich 30 sollte sich über mindestens die beiden Wellenberge 23a beiderseits der Dichtung 29 erstrecken, zweckmäßigerweise aber über jeweils zwei Wellenberge 23a vor und hinter der Ring-Dichtung 29. Wie die Zeichnung erkennen lässt, erstreckt er sich bei dem noch nicht zerteilten Verbundrohr nach Fig. 1 bis zum Übergangsabschnitt 25. Ein Teil wird also mit den Sägeschnitten 26, 27 herausgeschnitten. Wie Fig. 1 und 2 weiter erkennen lassen, schließt sich vom Spitzende 21 zu dem einstückig mit ihm ausgebildeten Rohrabschnitt 2 ein Übergangsabschnitt 31 an, in dem die Wand-Verstärkung bzw. -Verdickung wieder abnimmt. Dieser Übergangsabschnitt 31 erstreckt sich über ein bis drei Wellenberge 23b, im dargestellten Ausführungsbeispiel über zwei Wellenberge 23b.

Die Wand-Verdickung oder -Verstärkung im Verdickungs-Bereich 30 wird über den Füllgrad definiert. Der verfügbare Querschnitt, d. h. das innen durch das Innenrohr 3 und außen durch das Außen-Profil der Wellenberge 23a umgrenzte Profil wird mit um mindestens 100 % mehr Material gefüttt als die Wellenberge 23b in den nicht verdickten Bereichen. Mit anderen Worten wird in dem Verdickungs-Bereich 30 mindestens die doppelte Materialmenge zur Erzeugung des zweiten Außenrohr-Abschnitts 22 eingesetzt als in den übrigen Bereichen des Spitzendes 21 mit unverdickten Wellenbergen 23c, wobei die Obergrenze naturgemäß dadurch gebildet wird, dass die Wellenberge 23a keine inneren Hohlräume 32 mehr aufweisen. Durch die geschilderte Ausgestaltung des Spitzendes 21 im Verdickungs-Bereich 30 wird erreicht, dass eine gute Kompensation der von der Dichtung 29 auf die Wellenberge 23a und insbesondere deren Flanken 231, 232 ausgeübten Kräfte erfolgt. Die von den Wellenbergen 23a und insbesondere deren Flanken 231, 232 auf die Dichtung 29 ausgeübten Reaktionskräfte sind also auch über eine lange Lebensdauer konstant, so dass die dichte Verbindung zwischen Spitzende 21 und Rohr-Muffe 10 erhalten bleibt. Die Anpresskraft der Dichtung 29 gegen die Muffe 10 wird also nicht geringer durch Nachgeben der Flanken 231, 232.

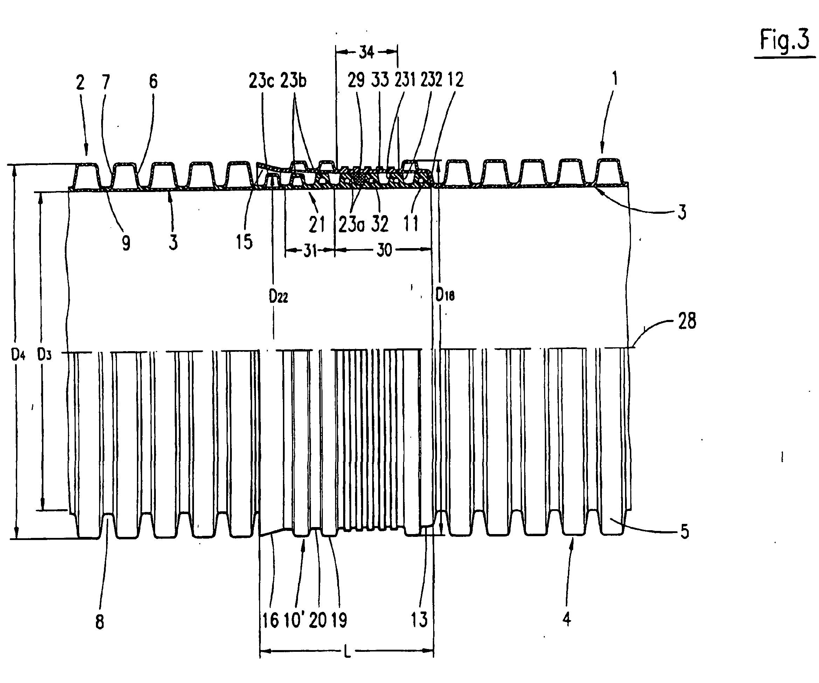

Das zweite Ausführungsbeispiel nach Fig. 3 unterscheidet sich von dem nach den Fig. 1 und 2 nur dadurch, dass die Rohr-Muffe 10' auf ihrer Außenseite nicht über die volle Länge L mit Wellenbergen 19 versehen ist, sondern über einen Teil der Länge L zwischen Wellenbergen 19 mit verhältnismäßig flachen Ring-Stegen bzw. Ring-Rippen 33 versehen ist. Dieser mit Ring-Stegen bzw. Ring-Rippen 33 versehene Bereich 34 überdeckt sich bei in die Rohr-Muffe 10' eingestecktem Spitzende 21 mit dem Verdickungs-Bereich 30.

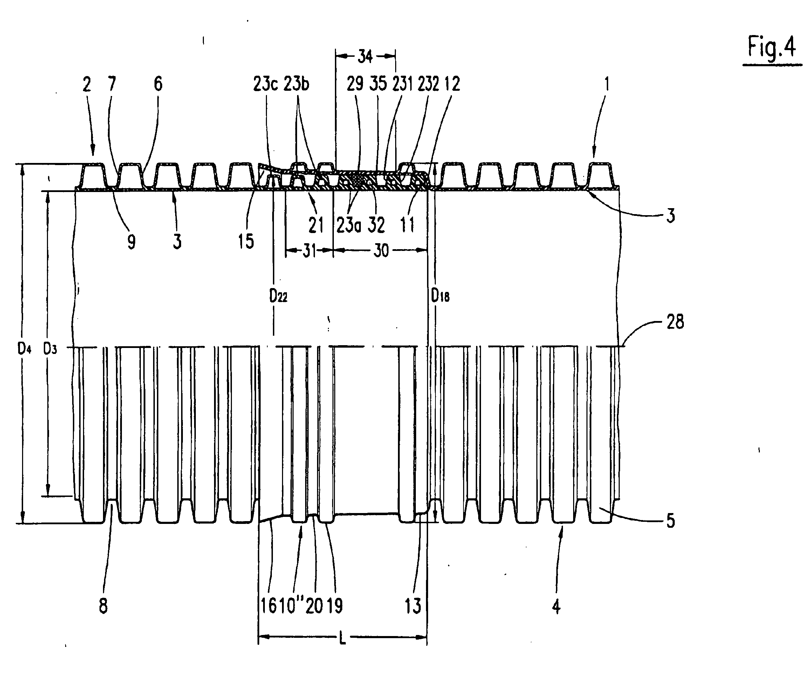

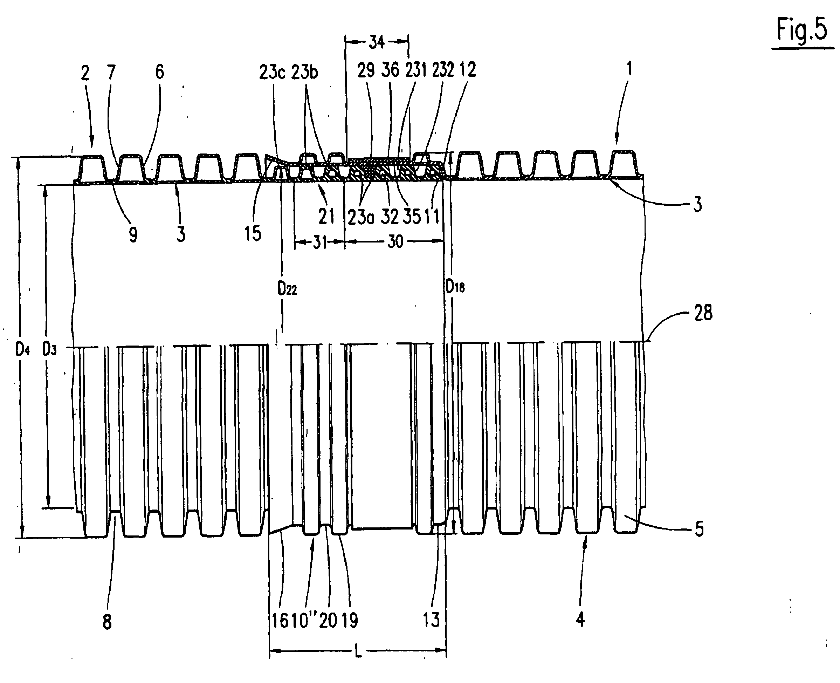

Das dritte Ausführungsbeispiel nach den Fig. 4 und 5 unterscheidet sich von dem nach den Fig. 1 und 2 bzw. dem nach Fig. 3 dadurch, dass in dem Bereich 34 der Rohr-Muffe 10" letztere einen glattwandigen Abschnitt 35 aufweist. Insbesondere bei großen Nennweiten kann in dem Bereich 34 nach der Herstellung der Verbindung zwischen den Rohrabschnitten 1 und 2 ein Spannband 36 vorgesehen werden, wie es in Fig. 5 angedeutet ist.

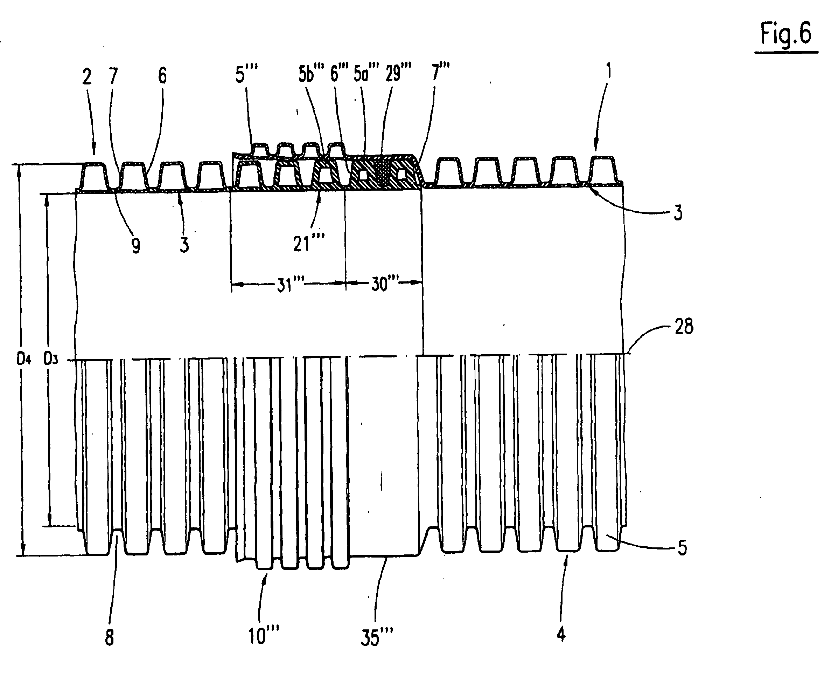

Bei dem vierten Ausfiihrungsbeispiel nach Fig. 6 weist auch das Spitzende 21"' des Rohrabschnittes 2 Wellenberge 5'" auf, die dasselbe Außenprofil wie die Wellenberge 5 im übrigen Bereich des Rohrabschnitts 2 haben. Das Spitzende 21"' weist einen Verdickungs-Bereich 30'" auf, der in diesem Fall nur jeweils einen Wellenberg 5a'" vor und hinter der Dichtung 29'" aufweist. Der Übergangsabschnitt 31"' mit abnehmender Wanddicke der Wellenberge 5b'" erstreckt sich in diesem Fall über drei Wellenberge. Für den Füllgrad gelten die vorherigen Ausführungen. Die Rohr-Muffe 10"' weist bei in diese eingeschobenem Spitzende 21"' über den Verdickungs-Bereich 30"' einen glattwandigen Abschnitt 35"' auf, um den gegebenenfalls wiederum ein Spannband 36 gespannt werden kann. Die Dichtung 29"' liegt gegen die Flanken 6"', 7"' zweier benachbarter Wellenberge 5a"' an.

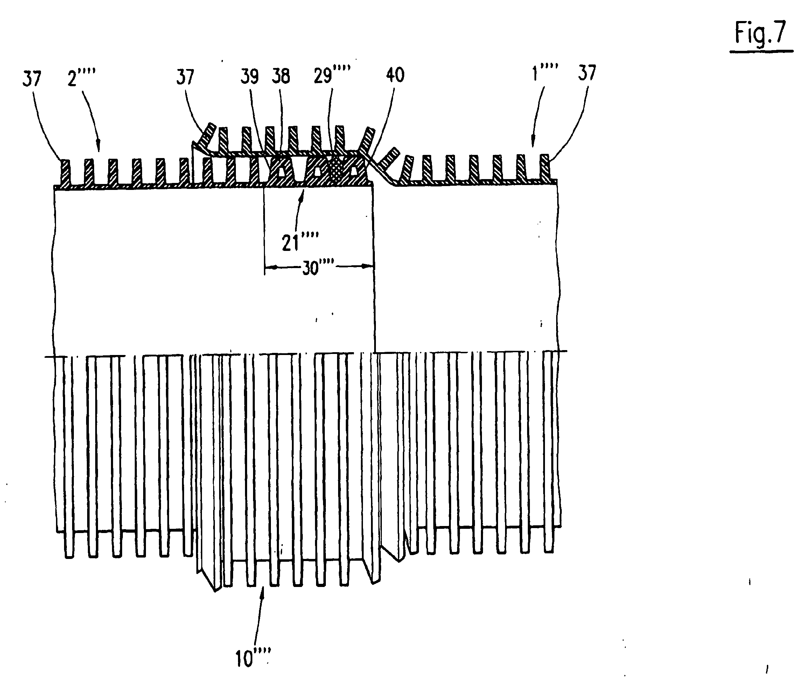

In Fig. 7 sind die Rohrabschnitte 1"" und 2"" ebenfalls als Verbundrohre ausgebildet, weisen aber als radial nach außen vorstehende ringförmige Vorsprünge Rippen 37 auf. Im Bereich der Spitzenden 21"" sind dagegen die radial nach außen vorstehenden ringförmigen Vorsprünge als Wellenberge 38 mit Flanken 39, 40 ausgebildet. Bei diesem Rohr-Bausatz ist selbstverständlich in jedem Verdickungs-Bereich 30"" eine Dichtung 29"" angeordnet, die gegen die Flanken 39, 40 benachbarter Wellenberge 38 anliegt. Die Rohr-Muffe 10"" ist hierbei ebenfalls mit Rippen 37 versehen.

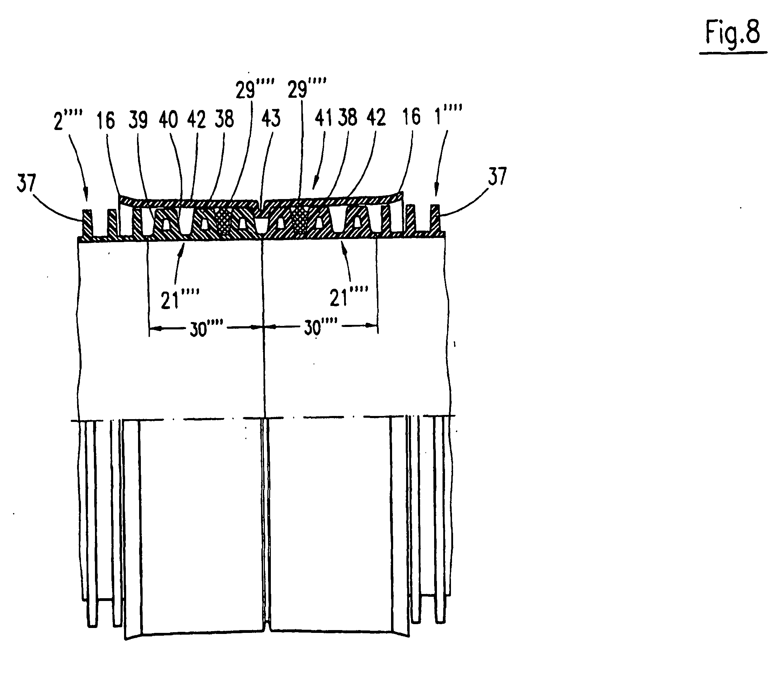

Der Rohr-Bausatz nach Fig. 8 unterscheidet sich dadurch von den zuvor geschilderten Rohr-Bausätzen und insbesondere dem Rohr-Bausatz nach Fig. 7, dass die Muffe als von den Rohrabschnitten 1"", 2"" gesonderte Doppel-Steck-Muffe 41 ausgebildet ist. Sie weist zwei zylindrische Abschnitte 42 auf, die spiegelsymmetrisch zueinander angeordnet sind und zwischen sich einen radial nach innen vorspringenden ringförmigen Anschlag-Steg 43 aufweisen. An ihren beiden Enden weisen die zylindrischen Abschnitte 42 jeweils einen Einfiihrabschnitt 16 auf. Beide Rohrabschnitte 1"", 2"" weisen jeweils ein Spitzende 21"" auf, das beim Einstecken in jeweils einen zylindrischen Abschnitt 42 der Muffe 41 zur Anlage an dem Anschlag-Steg 43 kommt.

## Patentansprüche

1. Rohr-Bausatz
- mit einem ersten Rohrabschnitt (1, 1''''),
- mit einem zweiten Rohrabschnitt (2, 2''''),
- mit einem Spitzende (21, 21''', 21 "") an mindestens einem Rohrabschnitt (1, 2, 1'''', 2" "),
-- das zumindest teilweise mit nach außen ringförmig vorstehenden Vorsprüngen mit Flanken (231, 232, 6"', 7"', 39, 40) versehen ist,
-- das zwischen zwei benachbarten Vorsprüngen eine gegen deren Flanken (231, 232 ,6"', 7"', 39, 40) anliegende Dichtung (29, 29"', 29" ") aufnimmt und
- mit einer Muffe (10, 10', 10", 10"', 10"", 41) zur Verbindung des ersten und des zweiten Rohrabschnitts (1, 2, 1"", 2""), wobei die Muffe (10, 10', 10", 10"', 10"", 41) das Spitzende (21, 21 "', 21"") aufnimmt, wobei
mindestens die die Dichtung (29, 29"', 29" ") zwischen sich aufnehmenden Vorsprünge als einen Verdickungs-Bereich (30, 30"', 30"") bildende verdickte Vorsprünge mit größerem Füllgrad als weiter entfernte Vorsprünge ausgebildet sind,
**dadurch gekennzeichnet, dass** neben dem Verdickungs-Bereich (30, 30'") ein Übergangsabschnitt (31, 31"') mit abnehmendem Füllgrad ausgebildet ist..

2. Rohr-Bausatz nach Anspruch 1, **dadurch gekennzeichnet,**
**dass** die Rohrabschnitte (1, 2, 1"", 2"") als Verbundrohre ausgebildet sind und
**dass** mindestens die am Spitzende (21, 21'", 21"") ausgebildeten Vorsprünge als Wellenberge (23, 5"', 38) ausgebildet sind.

3. Rohr-Bausatz nach Anspruch 1 oder 2, **dadurch gekennzeichnet,**
**dass** die Muffe eine am Ende des einen Rohrabschnittes (1) ausgebildete Rohr-Muffe (10, 10', 10", 10"', 10"") ist und
**dass** nur der andere Rohrabschnitt (2) ein Spitzende (21, 21'", 21"") aufweist.

4. Rohr-Bausatz nach Anspruch 1, **dadurch gekennzeichnet,**
**dass** der Übergangsabschnitt (31, 31"') ein bis drei Vorsprünge umfasst.

5. Rohr-Bausatz nach einem der Ansprüche 1 bis 4, dadurüh **gekennzeichnet**,
dass im Verdickungs-Bereich (30, 30"', 30"") der Füllgrad der Vorsprünge um mindestens 100 % höher ist als bei weiter entfernten Vorsprüngen.

6. Rohr-Bausatz nach einem der Ansprüche 1 bis 5, **dadurch gekennzeichnet,**
**dass** die Vorsprünge der Rohr-Abschnitte (1, 2) als Wellenberge (5) ausgebildet sind.

7. Rohr-Bausatz nach Anspruch 1 oder 2, **dadurch gekennzeichnet, dass** die Muffe als von den Rohrabschnitten (1"", 2"") gesonderte Steck-Muffe (41) ausgebildet ist und je ein Spitzende (21"") an jedem Rohrabschnitt (1"", 2"") überdeckt.

8. Rohr-Bausatz nach einem der Ansprüche 1 bis 6, **dadurch gekennzeichnet,**
**dass** die Vorsprünge der Rohr-Abschnitte (1"", 2"") als Rippen (37) ausgebildet sind.

9. Rohr-Bausatz nach einem der Ansprüche 1 bis 8, **dadurch gekennzeichnet,**
**dass** die Muffe (10, 10', 10"") um den Verdickungs-Bereich (30) herum verstärkt ausgebildet ist.

## Revendications

1. Construction de tuyau
- avec un premier tronçon de tuyau (1, 1''''),
- avec un deuxième tronçon de tuyau (2, 2''''),
- avec une extrémité en pointe (21, 21"', 21"") sur au moins un tronçon de tuyau (1, 2, 1"" , 2""),
-- qui est munie au moins partiellement de parties en saillie saillant vers l'extérieur en forme d'anneau avec des flancs (231, 232, 6''', 7''', 39, 40),
-- dans laquelle est logé un joint d'étanchéité (29, 29"', 29"") entre deux parties en saillie accolé contre leurs flancs (231, 232, 6"', 7''', 39, 40) et
- avec un manchon (10, 10', 10'', 10''', 10'''', 41) pour la liaison entre le premier et le deuxième tronçon de tuyau (1,2,1"",2""), l' extrémité en pointe (21, 21"', 21"") étant logée dans le manchon (10, 10', 10", 10"', 10'''', 41), au moins les parties en saillie entre lesquelles est logé le joint d'étanchéité (29, 29"', 29'''') étant configurées comme une zone de surépaisseur (30, 30''', 30'''') formant des parties en saillie épaissies avec un taux de remplissage plus important que d'autres parties en saillie plus éloignées,
**caractérisée en ce que**
un tronçon de transition (31, 31''') avec un taux de remplissage décroissant est formé à côté de la zone de surépaisseur (30, 30''').

2. Construction de tuyau selon la revendication 1, **caractérisée en ce que**
les tronçons de tuyau (1, 2, 1'''', 2'''') sont configurés comme des tuyaux composites et **en ce que**
les parties en saillie formées à l'extrémité en pointe (21, 21"', 21"") sont configurées comme des crêtes d' ondes (23, 5"', 38) .

3. Construction de tuyau selon la revendication 1 ou 2, **caractérisée en ce que**
le manchon est un manchon de tuyau (10, 10' , 10'', 10"' , 10'''') formé à l'extrémité d'un tronçon de tuyau (1) et **en ce que**
seul l'autre tronçon de tuyau (2) présente une extrémité en pointe (21, 21"', 21"").

4. Construction de tuyau selon la revendication 1, **caractérisée en ce que**
le tronçon de transition (31, 31''') comprend entre une et trois parties en saillie.

5. Construction de tuyau selon l'une quelconque des revendications 1 à 4, **caractérisée en ce que**,
dans la zone de surépaisseur (30, 30''', 30''''), le taux de remplissage des parties en saillie est supérieur d'au moins 100% à celui des parties en saillie plus éloignées.

6. Construction de tuyau selon l'une quelconque des revendications 1 à 5, **caractérisée en ce que**
les parties en saillie des tronçons de tuyau (1, 2) sont configurées comme des crêtes d'ondes (5).

7. Construction de tuyau selon la revendication 1 ou 2, **caractérisée en ce que**
le manchon est configuré comme un raccord emmanché (41) séparé des tronçons de tuyau (1"", 2"") et recouvre une extrémité en pointe (21"") sur chaque tronçon de tuyau (1"",2"").

8. Construction de tuyau selon l'une quelconque des revendications 1 à 6, **caractérisée en ce que**
les parties en saillie des tronçons de tuyau (1'''', 2'''') sont configurées comme des nervures (37).

9. Construction de tuyau selon la revendication 1 à 8, **caractérisée en ce que**
le manchon (10, 10', 10'''') est renforcé autour de la zone de surépaisseur (30).

## Claims

1. A pipe assembly
- with a first pipe section (1, 1"");
- with a second pipe section (2, 2"");
- with a spigot (21, 21"', 21"") formed on at least one pipe section (1, 2, 1"", , 2'''');
-- which is at least partially provided with outwardly annularly extending projections with flanks (231, 232, 6"', 7"', 39, 40) and
-- which receives a seal (29, 29"', 29"") between two adjacent projections which seal is arranged against their flanks (231, 232, 6"', 7"', 39, 40); and
- with a socket (10, 10', 10", 10"', 10"", 41) for interconnecting the first and second pipe sections (1, 2, 1"", 2"") wherein the socket (10, 10', 10", 10"', 10"", 41) receives the spigot (21, 21"', 21""); wherein
at least those projections between which the seal (29, 29"', 29"") is arranged are formed as projections of increased wall thickness forming a portion of increased wall thickness (30, 30"', 30" ") and comprising a higher filling ratio than more distantly arranged projections,
**characterized in that**
a transition section (31, 31"') of decreasing filling ratio is formed adjacent to the portion of increased wall thickness (30, 30"').

2. A pipe assembly according to claim 1, **characterized in that**
the pipe sections (1, 2, 1"", 2"") are formed as twin wall pipes and that at least the projections on the spigot (21, 21"', 21"") are formed as corrugation crests (23, 5"', 38).

3. A pipe assembly according to claim 1 or 2, **characterized in that**
the socket is an integral sleeve (10, 10', 10", 10"', 10"") formed on the end of the first pipe section (1) and
that only the second pipe section (2) comprises a spigot (21, 21"', 21"").

4. A pipe assembly according to claim 1, **characterized in that**
the transition section (31, 31"') comprises between one and three projections.

5. A pipe assembly according to any one of claims 1 to 4, **characterized in that**
the filling ratio of the projections in the portion of increased wall thickness (30, 30"', 30"") is at least double as high as that of more distantly arranged projections.

6. A pipe assembly according to any one of claims 1 to 5, **characterized in that**
the projections of the pipe sections (1, 2) are formed as corrugation crests (5).

7. A pipe assembly according to claim 1 or 2, **characterized in that**
the socket is formed as a double socket (41) which is separated from the pipe sections (1"", 2"") and overlaps one spigot (21"") on each pipe section (1"", 2"").

8. A pipe assembly according to any one of claims 1 to 6, **characterized in that**
the projections of the pipe sections (1"", 2"") are formed as ribs (37).

9. A pipe assembly according to any one of claims 1 to 8, **characterized in that**
the integral sleeve (10, 10', 10"") comprises an increased wall thickness around the portion of increased wall thickness (30) of the spigot.
